# EUROPÄISCHE PATENTSCHRIFT

(11) **EP 1 096 185 B1**
(45) Veröffentlichungstag und Bekanntmachung des Hinweises auf die Patenterteilung: **06.07.2005**
(21) Anmeldenummer: 00120981.6
(22) Anmeldetag: 27.09.2000
(51) Int. Cl.: F16J 15/32

(54) **Kassettendichtung**
Cartridge seal
Cartouche d'étanchéité

(30) Priorität: 28.10.1999 DE 19951845
(43) Veröffentlichungstag der Anmeldung: 02.05.2001
(73) Patentinhaber: Miele & Cie. KG, 33332 Gütersloh (DE)
(72) Erfinder: Blum, Rainer, 32657 Lemgo (DE); Maass, Heinz, 59302 Oelde (DE)

(56) Entgegenhaltungen:
- DE-A- 19 754 400
- US-A- 3 021 161
- US-A- 5 211 406
- US-A- 5 813 675

## Beschreibung

Die Erfindung betrifft eine Kassettendichtung zur Abdichtung von zwei relativ zueinander verdrehbaren Maschinenelementen, umfassend einen drehfest mit dem ersten Maschinenelement verbundenen Außenring mit mindestens einer dynamisch beanspruchten Dichtung aus einem elastomeren Werkstoff, und einen drehfest mit dem zweiten Maschinenelement verbundenen, aus einem Laufring für die dynamisch beanspruchte Dichtung und einem Stützring bestehenden Innenring, wobei der Stützring den axial gerichteten Teil des Laufrings vollständig untergreift und auf der am zweiten Maschinenelement anliegenden Fläche mit einem Dichtkörper aus elastomerem Werkstoff verbunden ist.

In der DE-A- 197 54 400 ist eine Kassettendichtung beschrieben, die eine mit dem Laufring verbundene Schleuderscheibe beinhaltet. Der Laufring ist zur Welle hin mit einer elastomeren Dichtung versehen, wobei die Schleuderscheibe einen Axialalvorsprung aufweist, der diese Dichtung teilweise untergreift. Da der Laufring die dynamische Dichtfläche für die Radialwellendichtung darstellt und deshalb hohen Belastungen ausgesetzt ist, wird er üblicherweise aus Edelstahl gefertigt. Solche Stähle weisen geringe Hafteigenschaften auf, das Anbringen einer elastomeren Dichtung ist deshalb mit Schwierigkeiten verbunden. Die in der DE-A- 197 54 400 beschriebene Kassettendichtung weist außerdem eine Schleuderscheibe auf, welche Flüssigkeit, die die Dichtung passiert hat, von einem zu schützenden Lager weg transportieren soll. Zur Abförderung der Flüssigkeit ist im ersten Maschinenelement eine Leckageleitung vorgesehen. Da diese Leckageleitung nur in dem Maschinenelement vorgesehen ist und deshalb die Flüssigkeit einen abgewinkelten Kanal um den Rand des Außenrings passieren muss, wird bei einem Einbauzustand, wie er in der Figur dieses Dokuments gezeigt ist, die Flüssigkeit aus dem oberen Bereich wieder auf die Dichtung zurücktropfen.

Aus der US-A- 3 021 161 ist eine Kassettendichtung mit den Merkmalen des Oberbegriffs des Anspruchs 1 bekannt. Bei dieser Dichtung ist keine Möglichkeit vorgesehen, Flüssigkeit, welche die dynamische Dichtung passiert hat, aus dem Bereich des Lagers fernzuhalten.

Der Erfindung stellt sich somit das Problem, eine Kassettendichtung der eingangs genannten Art zu offenbaren, bei der die Leckageflüssigkeit aus dem Einbauraum der Lager auch im oberen Bereich der Kassettendichtung vollständig abgeleitet werden kann. Erfindungsgemäß wird dieses Problem durch eine Kassettendichtung mit den Merkmalen des Patentanspruchs 1 gelöst. Vorteilhafte Ausgestaltungen und Weiterbildungen der Erfindung ergeben sich aus den nachfolgenden Unteransprüchen. Dabei weist der Stützring einen als Schleuderscheibe wirkenden radial gerichteten Fortsatz auf. Hierdurch wird Leckageflüssigkeit, die die Radialwellendichtung passiert, am Einbauraum eines Lagers vorbei geleitet, wodurch die Funktionstüchtigkeit und die Lebensdauer der Lager erheblich verlängert werden.

In einer vorteilhaften Ausführungsform einer Kassettendichtung zur Anordnung zwischen dem Laugenbehälter und dem Trommelzapfen einer Waschmaschine sind diejenigen Oberflächen des Stützrings, die der Lauge im Laugenbehälter ausgesetzt sind, vollständig von dem Dichtkörper umgeben. Hierdurch ist der Stützring vor dem aggressiven Medium Lauge geschützt, wodurch seine Haltbarkeit verlängert wird. Außerdem wird die Dichtwirkung zwischen Stützring und Laufring erhöht.

Es ist auch vorteilhaft, wenn das axiale Spaltmaß zwischen dem Randbereich des Stützrings und dem Außenring kleiner als das axiale Spaltmaß zwischen dem Stützring und der Radialwellendichtung ist. Hierdurch ist gewährleistet, dass ein Zusammendrücken der beiden Teile des Innenrings während des Transports oder Einbaus nicht zu einer Beschädigung der Dichtlippe oder zu einem Austreten von Fett aus der Fettkammer zwischen den beiden Dichtlippen der Radialwellendichtung führt.

Ein Ausführungsbeispiel der Erfindung ist in den Zeichnungen rein schematisch dargestellt und wird nachfolgend näher beschrieben. Es zeigt
- Figur 1: Die Lagerung des Trommelzapfens (1) bei einer Waschmaschine mit einer erfindungsgemäß aufgebauten Kassettendichtung (11);
- Figur 2: die Kassettendichtung (11) gemäß Figur 1 als Einzelheit.

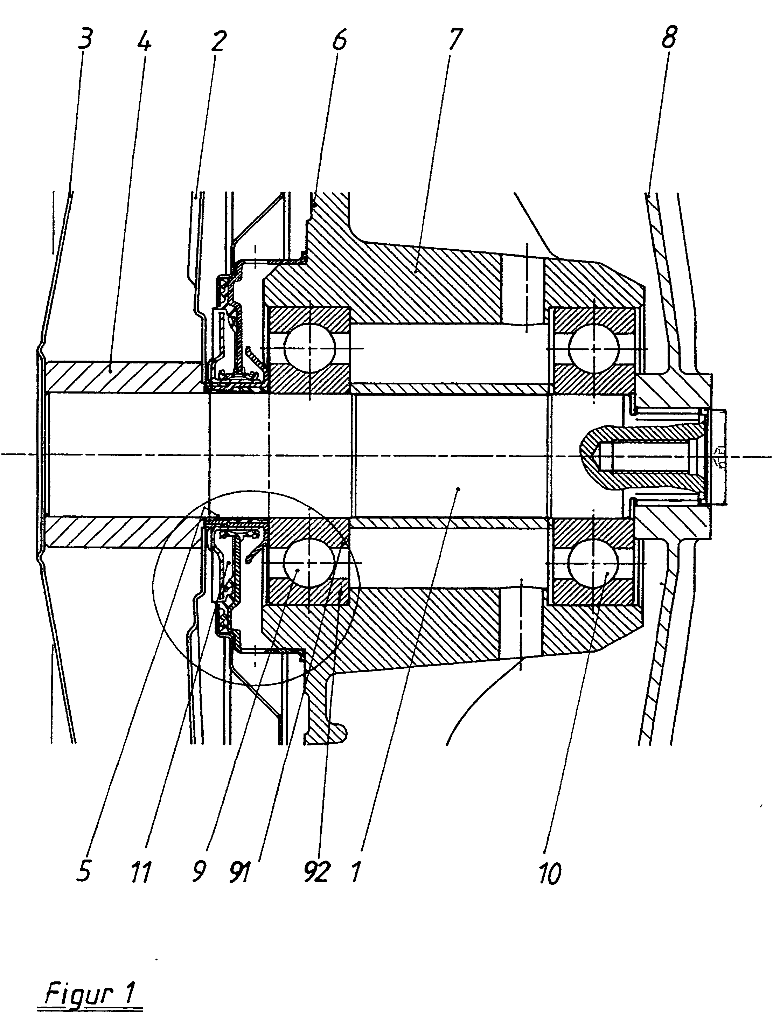

In der Figur 1 ist die Lageranordnung für den Trommelzapfen (1) einer Wäschebehandlungsmaschine mit einem Laugenbehälter (2) und einer darin drehbar gelagerten Trommel (3) zur Aufnahme der Wäsche in der Seitenansicht im Schnitt dargestellt. Im Zentrum der Laugenbehälterrückwand ist die Lageranordnung für die Trommel (3) angeordnet. Der mit der Trommel (3) über eine Nabe (4) verbundene Trommelzapfen (1) ist durch die Öffnung (5) in der Laugenbehälterrückwand hindurch geführt. An dem Laugenbehälter (2) ist das Lagerkreuz (6) mit dem Lagergehäuse (7) zur Aufnahme der Lageranordnung für die Trommel (3) befestigt. Um die Trommel (3) durch einen nicht dargestellten Motor antreiben zu können, trägt der Trommelzapfen (1) auf seinem hinteren Ende eine Riemenscheibe (8) für den Trommelantriebsriemen (nicht dargestellt). Die Lageranordnung für die Trommel (3) besteht aus einem vorderen und einem hinteren Radialkugellager (9, 10), die den Trommelzapfen (1) drehbar gelagert aufnehmen. Das vordere Lager (9) wird durch eine Kassettendichtung (11) geschützt.

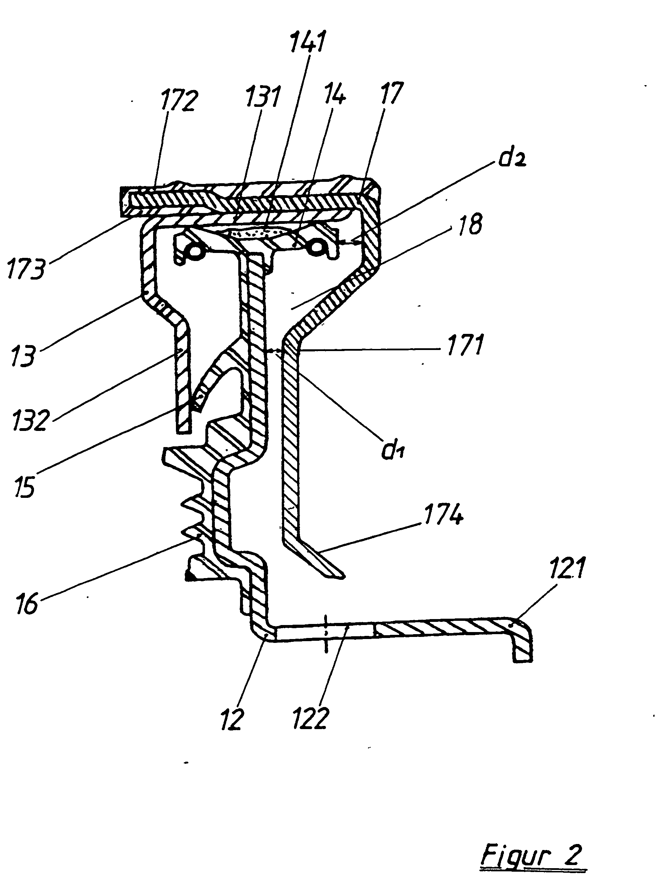

Die in Figur 2 als Einzelheit dargestellte Kassettendichtung (11) besteht im wesentlichen aus einem Außenring (12), der drehfest mit dem Laugenbehälter und dem Lagergehäuse verbunden ist, und einem zweiteiligen Innenring (13; 17), der drehfest mit dem Trommelzapfen verbunden ist. Alle Ringe werden aus Stahl hergestellt. Der Außenring (12) ist sowohl Träger von dynamisch beanspruchten Dichtungen (14; 15) als auch von einer statisch beanspruchten Dichtung (16). Der Innenring besteht aus einem Laufring (13) und einem Stützring (17).

Eine Radialwellendichtung (14) umschließt den axial gerichteten Teil (131) des Laufrings (13) unter radialer Vorspannung dichtend, während die Dichtlippe einer Vorschaltdichtung (15) am Radialschenkel (132) anliegt. Der Laufring (13) ist aus poliertem Edelstahl gefertigt, um der Beanspruchung durch die dynamischen Dichtungen (14; 15) standzuhalten und diese nicht zu verschleißen.

Die statisch beanspruchte Dichtung (16) berührt den Laugenbehälter (2) unter elastischer Vorspannung, wobei sich der äußere, axial gerichtete Rand (121) des Außenrings (12) am Lagerkreuz (6) abstützt.

In diesem Ausführungsbeispiel bestehen alle dynamisch beanspruchten und statisch beanspruchten Dichtungen (14; 15; 16), die am Außenring (12) aufvulkanisiert sind, aus demselben Elastomerwerkstoff und sind einstückig ineinander übergehend ausgebildet.

Davon abweichende Ausgestaltungen sind ebenfalls denkbar, beispielsweise, dass alle dynamisch beanspruchten Dichtungen (14; 15) aus demselben Elastomerwerkstoff bestehen und die statisch beanspruchten Dichtung (16) aus einem davon abweichenden Werkstoff.

Die Kassettendichtung (11) wird durch die Nabe (4) in axialer Richtung gegen den Stützring (17) und gegen den Innenring (91) des Lagers (9) verspannt. Der Stützring (17) untergreift den axial gerichteten Teil (131) des Laufrings vollständig, beide Ringe sind durch Presspassung drehfest miteinander verbunden. Der Stützring (17) erfüllt innerhalb der Kassettendichtung (11) mehrere Funktionen:
- Durch einen Dichtkörper (172), der an seinen Innenumfang anvulkanisiert ist, erfolgt die Abdichtung gegenüber dem Trommelzapfen (1). Der Dichtkörper (172) besitzt außerdem einen um die zum Laugenbehälter (2) gerichtete Stirnfläche bis auf die Außenfläche des Stützrings (17) herumgezogenen Rand (173) und untergreift den Laufring (13) teilweise. Hierdurch ist gewährleistet, dass diejenigen Oberflächen des Stützrings (17), die der Lauge im Laugenbehälter (2) ausgesetzt sind, vollständig von dem Dichtkörper (172; 173) umgeben sind. Der Stützring (17) kann deshalb aus Baustahl gefertigt werden.
- Dadurch dass er annähernd c-förmig ausgebildet ist, bildet der Stützring (17) den lagerseitigen Abschluss der Kassettendichtung (11) und verhindert ein Herausrutschen des Außenrings (12) aus der Anordnung während des Transports oder Einbaus.
- Durch spezielle Formgebung und Dimensionierung wird erreicht, dass das axiale Spaltmaß d₁ zwischen dem Randbereich (171) des Stützrings (17) und dem Außenring (12) kleiner als das axiale Spaltmaß d₂ zwischen dem Stützring (17) und der Radialwellendichtung (14) ist. Hierdurch ist gewährleistet, dass ein Zusammendrücken der beiden Teile (13; 17) des Innenrings während des Transports oder Einbaus nicht zu einer Beschädigung der Dichtlippe oder zu einem Austreten von Fett aus der Fettkammer (141) zwischen den beiden Dichtlippen der Radialwellendichtung (14) führt.
- Durch einen radial gerichteten Fortsatz (174), der sich über den Außenring (92) des Lagers (9) hinaus erstreckt, wirkt der Stützring (17) als Schleuderscheibe. Das innerhalb des Hohlraums (18) entstehende Kondenswasser und/ oder Waschlauge, die als Leckage an den dynamisch beanspruchten Dichtungen (14; 15) vorbei in den Hohlraum (18) eingedrungen ist, wird durch die Rotation des Trommelzapfens und die entsprechende Bewegung der Schleuderscheibe Bohrungen (122) im axial gerichteten Rand (121) des Außenrings (12) abgeführt. Hierzu sollte der Außenring (12) auf seinem gesamten Umfang mit Bohrungen (122) versehen sein, die dem nach außen gerichteten Rand der Schleuderscheibe zugeordnet sind und durch die die Flüssigkeit aus dem Inneren der Kassettendichtung (11) austreten kann.

## Patentansprüche

1. Kassettendichtung (11) zur Abdichtung von zwei relativ zueinander verdrehbaren Maschinenelementen, umfassend einen drehfest mit dem ersten Maschinenelement verbindbaren Außenring (12) mit mindestens einer dynamisch beanspruchten Dichtung (14; 15) aus einem elastomeren Werkstoff, und einen drehfest mit dem zweiten Maschinenelement verbindbaren, aus einem Laufring (13) für die dynamisch beanspruchte Dichtung und einem Stützring (17) bestehenden Innenring, wobei der Stützring (17) den axial gerichteten Teil (131) des Laufrings (13) vollständig untergreift und auf der am zweiten Maschinenelement (1) anliegenden Fläche mit einem Dichtkörper (172) aus elastomerem Werkstoff verbindbar ist,
**dadurch gekennzeichnet,**
**dass** der Stützring (17) einen als Schleuderscheibe wirkenden radial gerichteten Fortsatz (174) aufweist und dass der Außenring (12) Abflussbohrungen aufweist, welche dem radial nach außen gerichteten Rand der Schleuderscheibe (174) zugeordnet sind.

2. Kassettendichtung (11) nach Anspruch 1 zur Anordnung zwischen dem Laugenbehälter (2) und dem Trommelzapfen (1) einer Waschmaschine,
**dadurch gekennzeichnet,**
**dass** diejenigen Oberflächen des Stützrings (17), die im Gebrauch der Lauge im Laugenbehälter (2) ausgesetzt sind, vollständig von dem Dichtkörper (172) umgeben sind.

3. Kassettendichtung (11) nach einem der Ansprüche 1 oder 2,
**dadurch gekennzeichnet,**
**dass** das axiale Spaltmaß d₁ zwischen dem Randbereich (171) des Stützrings (17) und dem Außenring (12) kleiner als das axiale Spaltmaß d₂ zwischen dem Stützring (17) und der Radialwellendichtung (14) ist.

## Claims

1. Cassette gasket (11) for sealing two machine elements which are rotatable relative to each other, comprising an outer ring (12), which can be connected non-rotatably to the first machine element and has at least one dynamically stressed gasket (14; 15) made of an elastomeric material, and an inner ring, which can be connected non-rotatably to the second machine element and comprises a thrust ring (13) for the dynamically stressed gasket and a support ring (17), the support ring (17) engaging the axially directed part (131) of the thrust ring (13) completely from below and being able to be connected, on the face which abuts on the second machine element (1), to a sealing body (172) made of an elastomeric material,
**characterised in that**
the support ring (17) has a radially directed extension (174) which acts as a spinning disc, and **in that** the outer ring (12) has discharge borings which are associated with the radially outwardly directed edge of the spinning disc (174).

2. Cassette gasket (11) according to claim 1, for disposing between the detergent solution container (2) and the drum trunnion (1) of a washing machine,
**characterised in that**
those surfaces of the support ring (17) which, in use, are exposed to the detergent solution in the detergent solution container (2), are completely surrounded by the sealing body (172).

3. Cassette gasket (11) according to one of the claims 1 or 2,
**characterised in that**
the axial gap size d₁ between the edge region (171) of the support ring (17) and the outer ring (12) is smaller than the axial gap size d₂ between the support ring (17) and the radial shaft gasket (14).

## Revendications

1. Joint d'étanchéité en cartouche (11) pour l'étanchement de deux éléments de machine rotatifs l'un par rapport à l'autre, comprenant une bague extérieure (12) pouvant être reliée en solidarité de rotation au premier élément de machine et dotée d'au moins un joint d'étanchéité (14 ; 15) sollicité dynamiquement et réalisé en un matériau élastomère, et comprenant une bague intérieure pouvant être reliée en solidarité de rotation au deuxième élément de machine et constituée d'une bague de roulement (13) pour le joint d'étanchéité sollicité dynamiquement et d'une bague de soutien (17), sachant que la bague de soutien (17) s'engage totalement sous la partie orientée axialement (131) de la bague de roulement (13) et peut être reliée, sur la face appliquée contre le deuxième élément de machine (1), à un corps d'étanchéité (172) en matériau élastomère,
**caractérisé en ce que** la bague de soutien (17) présente un prolongement orienté radialement (174) jouant le rôle de disque centrifuge, et **en ce que** la bague extérieure (12) présente des perçages d'évacuation qui sont associés au bord du disque centrifuge (174) qui est orienté radialement vers l'extérieur.

2. Joint d'étanchéité en cartouche (11) selon la revendication 1, à disposer entre la cuve de lavage (2) et le pivot de tambour (1) d'une machine à laver,
**caractérisé en ce que** les surfaces de la bague de soutien (17) qui sont exposées en utilisation au bain de lavage dans la cuve de lavage (2) sont entièrement entourées par le corps d'étanchéité (172).

3. Joint d'étanchéité en cartouche (11) selon la revendication 1 ou 2,
**caractérisé en ce que** la dimension axiale d₁ de l'interstice entre là région de bord (171) de la bague de soutien (17) et la bague extérieure (12) est inférieure à la dimension axiale d₂ de l'interstice entre la bague de soutien (17) et le joint radial (14) d'étanchéité d'arbre.
